# EUROPÄISCHE PATENTSCHRIFT

(11) **EP 3 284 210 B1**
(45) Veröffentlichungstag und Bekanntmachung des Hinweises auf die Patenterteilung: **19.09.2018**
(21) Anmeldenummer: 16715854.2
(22) Anmeldetag: 13.04.2016
(51) Int. Cl.: H04L 12/10, H04L 12/40

(54) **BUSSYSTEM MIT EINEM EINSPEISEMODUL UND EINEM VERBRAUCHERMODUL**
BUS SYSTEM COMPRISING A FEED MODULE AND A LOAD MODULE
SYSTÈME DE BUS COMPORTANT UN MODULE D'ALIMENTATION ET UN MODULE DE CONSOMMATEUR

(30) Priorität: 14.04.2015 DE 102015105702
(43) Veröffentlichungstag der Anmeldung: 21.02.2018
(73) Patentinhaber: Beckhoff Automation GmbH, 33415 Verl (DE)
(72) Erfinder: PRUESSMEIER, Uwe, 32657 Lemgo (DE); RETTIG, Thomas, 33378 Rheda-Wiedenbrueck (DE); POHL, Christopher, 33415 Verl (DE); KUENNE, Johannes, 33378 Rheda-Wiedenbrueck (DE); BECKHOFF, Hans, 33415 Verl (DE)
(74) Vertreter: Patentanwaltskanzlei WILHELM & BECK
(86) Internationale Anmeldenummer: PCT/EP2016/058091
(87) Internationale Veröffentlichungsnummer: WO 2016/166143

(56) Entgegenhaltungen:
- DE-A1-102011 087 828
- US-A1- 2010 078 992
- US-A1- 2010 277 293

## Beschreibung

Die Erfindung betrifft ein Bussystem, insbesondere zum Einsatz in der Industrieautomation, mit einem Einspeisemodul und mindestens einem Verbrauchermodul, die über eine Datenleitung und eine Gleichstromversorgung verbunden sind. Die Erfindung betrifft ferner ein Einspeisemodul und ein Verbrauchermodul für ein solches Bussystem.

Moderne Konzepte in der industriellen Automatisierungstechnik, d.h. der Steuerung und Überwachung von technischen Prozessen mit Hilfe von Software, beruhen auf der Idee einer zentralen Steuerung mit verteilter Sensor-/Aktorebene. Die Teilnehmer kommunizieren dabei untereinander und mit übergeordneten Systemen über industrielle Datennetzwerke, im Weiteren auch als Automatisierungsnetzwerke bezeichnet.

Das Ethernet ist der am weitesten verbreitete Kommunikationsstandard in lokalen Netzwerken (LAN) und wird vor allem durch die IEEE-Norm 802.3 festgelegt. Das Ethernet basiert auf einem LAN-Aufbau, bei dem eine Mehrzahl von Steuerknoten, z.B. Computer oder Maschinen kabelgebunden miteinander verbunden sind, wobei das Ethernet-Protokoll die Verkapselung der zu übermittelnden Daten in Datenpaketen, im Weiteren auch als Telegramm bezeichnet, mit vorbestimmtem Format vornimmt. Es können dabei verschiedene Ethernet-Varianten eingesetzt werden, die sich in der Übertragungsrate, dem verwendeten Kabeltypen und der Leitungscodierung unterscheiden.

Die Kommunikation zwischen den Teilnehmern läuft bei industriell eingesetzten Ethernet-Netzwerken in der Regel über eine vier Adern aufweisende Datenleitung, wobei die vier Adern oft als zwei verdrillte Adernpaare ausgeführt sind. Das Verdrillen der Adernpaare reduziert das Übersprechen. Die beiden Adern eines Adernpaares werden immer gemeinsam verwendet, wobei über jeweils ein Adernpaar ein differentielles Datensignal übertragen wird. Manchmal werden auch alle vier Adern zusammen verdrillt, was zwar zu Nachteilen bei der elektromagnetische Verträglichkeit führt, aber den Vorteil einer höheren Flexibilität der Leitung hat.

Eine häufig zwingende Anforderung an Automatisierungsnetzwerke ist es, dass die Ausgänge einer Maschine, die Aktoren, jederzeit in einen sicheren Zustand gebracht werden können, ohne dabei die Möglichkeit zur Überwachung der Maschine zu verlieren. Die Sensoren und die Steuerung im Automatisierungsnetzwerk müssen deshalb unabhängig von den Aktoren betrieben werden können. Aus diesem Grund ist Energieversorgung der Aktoren in der Regel getrennt von der Energieversorgung der Sensoren bzw. der Steuerung ausgeführt, um ein Abschalten der Aktorversorgung unabhängig von der Sensoren- bzw. Steuerungsversorgung durchzuführen.

Die im Automatisierungsnetzwerk benötigten Energieversorgungsleitungen werden in der Regel unabhängig von der Datenleitung verlegt, was mindestens zwei dedizierte Verkabelungen mit der entsprechenden Kontakttechnik nötig macht. In der Industrieautomation ist es aber wünschenswert, stets eine möglichst kostengünstige und einfache Verkabelung im Automatisierungsnetzwerk zu erreichen. Dies ist insbesondere dann von Bedeutung, wenn aufgrund von Umgebungsanforderungen eine gute Schirmung, eine hohe Schutzklasse oder eine hohe Temperaturbeständigkeit für die Verkabelung erforderlich sind. Die Verkabelung ist deshalb oft für einen relevanten hohen Anteil der Systemkosten verantwortlich.

Ein Ansatz, um Kosten bei der Verkabelung zu sparen, besteht darin, die Stromversorgung und die Datenübertragung in einer Verkabelung zu kombinieren. So kann mit Hilfe des "Power over Ethernet"(PoE)-Standard über eine vieradrige Standard-Ethernet-Datenleitung zusätzlich zu den beiden differentiellen Datensignalen auf den zwei verdrillten Adernpaaren eine einzelne Spannung mit übertragen werden. Beim PoE-Standard wird hierfür ein speziell angepasster Ethernet-Übertrager verwendet, der die beiden für die Spannung benötigten Potentiale über eine Mittelanzapfung auf je einem Adernpaar anlegt. Da jedoch in der Industrieautomation häufig zwei getrennte Energieversorgungen erforderlich sind, eine für die Aktoren und die andere für die Sensoren bzw. die Steuerung, ist auch in einem PoE-System mit einer vieradrigen Datenleitung eine zusätzliche Verkabelung für eine zweite Energieversorgung erforderlich.

Aufgabe der vorliegenden Erfindung ist es, ein Bussystem, insbesondere zum Einsatz in der Industrieautomation, ein Einspeisemodul und ein Verbrauchermodul für ein solches Bussystem bereitzustellen, die einen reduzierten Verkabelungsaufwand zur Übertragung zweier galvanisch getrennter Versorgungsspannungen ermöglichen, ohne dadurch die Datenkommunikation zwischen den Teilnehmern im Bussystem zu beeinträchtigen.

Diese Aufgabe wird mit einem Bussystem nach Anspruch 1, einem Einspeisemodul nach Anspruch 9 und einem Verbrauchermodul nach Anspruch 13 gelöst. Bevorzugte Weiterbildungen sind in den abhängigen Ansprüchen angegeben.

Ein Bussystem weist ein Einspeisemodul auf, das eine erste Gleichspannungseinspeisung, eine zweite Gleichspannungseinspeisung, eine physikalische Schnittstelle, einen ersten Übertrager, einen zweiten Übertrager, eine erste induktive Baugruppe, eine zweite induktive Baugruppe, eine erste kapazitive Baugruppe und eine zweite kapazitive Baugruppe umfasst. Das Bussystem weist weiter ein Verbrauchermodul auf, das einen ersten Gleichspannungsverbraucher, einen zweiten Gleichspannungsverbraucher, eine physikalische Schnittstelle, einen ersten Übertrager, einen zweiten Übertrager, eine erste induktive Baugruppe, eine zweite induktive Baugruppe, eine erste kapazitive Baugruppe und eine zweite kapazitive Baugruppe umfasst. Eine Datenleitung des Bussystems verbindet das Einspeisemodul und das Verbrauchermodul über einen ersten Kanal, der ein erstes Adernpaar umfasst, und über einen zweiten Kanal, der ein zweites Adernpaar umfasst. Der erste Kanal der Datenleitung verbindet die physikalische Einspeisemodul-Schnittstelle über den ersten Einspeisemodul-Übertrager, die erste kapazitive Einspeisemodul-Baugruppe, die erste kapazitive Verbrauchermodul-Baugruppe und den ersten Verbrauchermodul-Übertrager mit der physikalischen Verbrauchermodul-Schnittstelle und die erste Gleichspannungsquelle über die erste induktive Einspeisemodul-Baugruppe und die erste induktive Verbrauchermodul-Baugruppe mit dem ersten Verbrauchermodul-Gleichspannungsverbraucher, um ein erstes differenzielles Datensignal zwischen der physikalischen Einspeisemodul-Schnittstelle und der physikalischen Verbrauchermodul-Schnittstelle und einen ersten Gleichstrom von der ersten Gleichspannungsquelle zu dem ersten Verbrauchermodul-Gleichspannungsverbraucher zu übertragen. Der zweite Kanal der Datenleitung verbindet die physikalische Einspeisemodul-Schnittstelle über den zweiten Einspeisemodul-Übertrager, die zweite kapazitive Einspeisemodul-Baugruppe, die zweite kapazitive Verbrauchermodul-Baugruppe und den zweiten Verbrauchermodul-Übertrager mit der physikalischen Verbrauchermodul-Schnittstelle und die zweite Gleichspannungsquelle über die zweite induktive Einspeisemodul-Baugruppe und die zweite induktive Verbrauchermodul-Baugruppe mit dem zweiten Verbrauchermodul-Gleichspannungsverbraucher, um ein zweites differenzielles Datensignal zwischen der physikalischen Einspeisemodul-Schnittstelle und der physikalischen Verbrauchermodul-Schnittstelle und einen zweiten Gleichstrom von der zweiten Gleichspannungsquelle zu dem zweiten Verbrauchermodul-Gleichspannungsverbraucher zu übertragen.

Das Einspeisemodul weist weiter einen Anschluss für die Datenleitung auf, die eine erste Kontaktstelle für den ersten Kanal mit dem ersten Adernpaar und eine zweite Kontaktstelle für den zweiten Kanal mit dem zweiten Adernpaar umfasst. Die physikalische Einspeisemodul-Schnittstelle ist ausgelegt, über den ersten Einspeisemodul-Übertrager und die erste kapazitive Einspeisemodul-Baugruppe das erste differenzielle Datensignal zu bzw. von der ersten Kontaktstelle für den ersten Kanal der Datenleitung und über den zweiten Einspeisemodul-Übertrager und die zweite kapazitive Einspeisemodul-Baugruppe das zweite differenzielle Datensignal zu bzw. von der zweiten Kontaktstelle für den zweiten Kanal der Datenleitung zu übertragen. Die erste Gleichspannungsquelle ist ausgelegt, über die erste induktive Einspeisemodul-Baugruppe die erste Gleichspannung an der ersten Kontaktstelle für den ersten Kanal der Datenleitung anzulegen. Die zweite Gleichspannungsquelle ist ausgelegt, über die zweite induktive Einspeisemodul-Baugruppe die zweite Gleichspannung an der zweiten Kontaktstelle für den zweiten Kanal der Datenleitung anzulegen.

Das Verbrauchermodul für das Bussystem weist weiter einen Anschluss für die Datenleitung auf, die eine erste Kontaktstelle für den ersten Kanal mit dem ersten Adernpaar und eine zweite Kontaktstelle für den zweiten Kanal mit dem zweiten Adernpaar umfasst. Die physikalische Verbrauchermodul-Schnittstelle ist ausgelegt, über den ersten Verbrauchermodul-Übertrager und die erste kapazitive Verbrauchermodul-Baugruppe das erste differenzielle Datensignal zu bzw. von der ersten Kontaktstelle für den ersten Kanal der Datenleitung und über den zweiten Verbrauchermodul-Übertrager und die zweite kapazitive Verbrauchermodul-Baugruppe das zweite differenzielle Datensignal zu bzw. von der zweiten Kontaktstelle für den zweiten Kanal der Datenleitung zu übertragen. Der erste Verbrauchermodul-Gleichspannungsverbraucher ist ausgelegt, über die erste induktive Verbrauchermodul-Baugruppe die erste Gleichspannung an der ersten Kontaktstelle für den ersten Kanal der Datenleitung zu empfangen. Der zweite Verbrauchermodul-Gleichspannungsverbraucher ist ausgelegt, über die zweite induktive Verbrauchermodul-Baugruppe die zweite Gleichspannung an der zweiten Kontaktstelle für den zweiten Kanal der Datenleitung zu empfangen.

Im Einspeisemodul und im Verbrauchermodul des Bussystems wird jeweils eine Kombination aus induktiven und kapazitiven Baugruppen eingesetzt, um zwei galvanisch getrennte Gleichspannungen an einer vieradrigen Datenleitung anzulegen. Mit nur einer einzelnen Verkabelung, die aus der vieradrigen Datenleitung besteht, können so parallel zwei galvanisch getrennte Gleichströme zusätzlich zu zwei differentiellen Datensignalen auf die beiden Adernpaare der Datenleitung übertragen werden. Die Funktionalität des Bussystems wird nicht verändert, so dass beliebige Busstrukturen wie Stern, Linie oder Ring möglich sind.

Das Bussystem eignet sich insbesondere zum Einsatz in der Industrieautomation. Mit Hilfe der über die vieradrige Datenleitung geführten, zwei galvanisch voneinander getrennten Gleichströme kann eine separate Energieversorgung für die Aktoren bzw. für die Sensoren und die Steuerung sichergestellt werden. Somit ist ein Abschalten der Aktorversorgung unabhängig von der Sensor- bzw. Steuerungsversorgung möglich, so dass die zwingende Anforderung in industriellen Automatisierungsnetzwerken, jederzeit in der Lage zu sein, die Ausgänge einer Maschine d.h. die Aktoren in einen sicheren Zustand bringen zu können, ohne dabei die Kommunikation mit der Maschine zu unterbrechen, d.h. die Sensoren bzw. die Steuerung weiter ansprechen zu können, eingehalten werden kann.

Das erste differenzielle Datensignal und das zweite differenzielle Datensignal sind jeweils differenzielle Ethernet-Signale. Das Bussystem bzw. das Einspeisemodul und das Verbrauchermodul eignen sich deshalb insbesondere zum Einsatz mit Ethernet als dem Kommunikationsstandard im Automatisierungsnetzwerk.

Wenigstens einer der beiden von der ersten bzw. zweiten Gleichspannungsquelle zu dem ersten bzw. zweiten Verbrauchermodul-Gleichspannungsverbraucher übertragenen Gleichströme ist schaltbar, wobei das Einspeisemodul weiter einen Strombegrenzer für die dem schaltbaren Gleichstrom zugeordneten Gleichspannungsquelle aufweist.

Der Strombegrenzer verhindert, dass der Anlaufstrom des nachgeschalteten Verbrauchermoduls möglicherweise den Sättigungsstrom der induktiven Baugruppe übersteigt, so dass die Induktivität zusammenbricht und die Entkopplung der angelegten Gleichspannung und des differenziellen Datensignals nicht mehr gewährleistet werden kann. Das differenzielle Datensignal wird dann sehr stark gedämpft, so dass eine fehlerfreie Datenübertragung nicht mehr möglich ist. Ein solcher hoher Strom kann insbesondere beim An- und Abschalten der Energieversorgung auftreten, wenn z. B. die Aktoren in einem Automatisierungsnetzwerk in einen sicheren Zustand gebracht bzw. aus diesem heraus wieder aktiviert werden. Weiterhin wird der maximale zulässige Dauerstrom, der durch die Induktivität fließt, durch den Ohmschen Widerstand und die thermischen Eigenschaften der induktiven Baugruppe bestimmt. Wenn diese Schwelle für den maximal zulässigen Dauerstrom aber dauerhaft überschritten wird, verliert die induktive Baugruppe ihre Induktivitätseigenschaften und wird im schlimmsten Falle zerstört.

Zum Schalten des Gleichstroms ist ein prellarmer Schalter zwischen der zweiten Gleichspannungsquelle und dem Strombegrenzer des Einspeisemoduls angeordnet. Beim Prellen ruft eine Betätigung des Schalters kurzzeitig ein mehrfaches Schließen und Öffnen des Kontakts hervor. Das mehrfache Schließen und Öffnen des Kontaktes führt aber zu einem erhöhten Kontaktabbrand und schnelleren Ausfall des Kontaktes insbesondere dann, wenn gleichzeitig Überströme auftreten. Der Einsatz eines prellarmen Schalters verhindert ein mehrfaches Schließen und Öffnen des Kontaktes bei Betätigung und erhöht somit die Lebensdauer des Kontaktes.

Das Verbrauchermodul weist eine Verarbeitungseinheit, eine weitere physikalische Schnittstelle, einen dritten Übertrager, einen vierten Übertrager, eine dritte induktive Baugruppe und eine vierte induktive Baugruppe, eine dritte kapazitive Baugruppe und eine vierte kapazitive Baugruppe auf. Die Verarbeitungseinheit verbindet dabei die physikalische Verbrauchermodul-Schnittstelle mit der weiteren physikalischen Verbrauchermodul-Schnittstelle, um das erste differenzielle Datensignal und das zweite differenzielle Datensignal zu übertragen. Weiterhin verbindet der erste Verbrauchermodul-Gleichspannungsverbraucher die erste induktive Verbrauchermodul-Baugruppe mit der dritten induktiven Verbrauchermodul-Baugruppe, um den ersten Gleichstrom zu übertragen, und der zweite Verbrauchermodul-Gleichspannungsverbraucher die zweite induktive Verbrauchermodul-Baugruppe mit der vierten induktiven Verbrauchermodul-Baugruppe, um den zweiten Gleichstrom zu übertragen. Mit einer solchen Auslegung ist ein Weiterleiten der beiden differenziellen Datensignale und der beiden galvanisch getrennten Gleichspannungen durch das Verbrauchermodul möglich, wodurch sich ein insbesondere in Bezug auf die Verkabelung einfacher Bussystem-Aufbau bewerkstelligen lässt, z.B. eine linienförmige Aneinanderreihung mehrerer Verbrauchermodule.

Das Verbrauchermodul weist eine Spannungsüberwachungsbaugruppe auf, die mit dem ersten Verbrauchermodul und dem zweiten Verbrauchermodul verbunden ist, um zu überwachen, ob das erste Verbrauchermodul und das zweite Verbrauchermodul jeweils in einem spezifizierten Bereich der Betriebsspannung arbeiten. Mit der Integration der Spannungsüberwachungsbaugruppe ist eine verbesserte Diagnose im Bussystem möglich, wodurch sich eine eventuelle Fehlersuche vereinfachen lässt.

Nachfolgend wird die Erfindung anhand von Figuren näher erläutert.
Figur 1 zeigt in schematischer Darstellung ein Bussystem mit einem Einspeisemodul und einem Verbrauchermodul zur kombinierten Übertragung zweier differenzieller Datensignale und zweier galvanisch getrennter Gleichspannungen auf einer vieradrigen Datenleitung, und
Figur 2 zeigt ein Schaltbild einer Strombegrenzungsschaltung.

Bei Bussystemen erfolgt die Energieversorgung und Datenübertragung zwischen den einzelnen Baugruppen in der Regel über Kabelverbindungen. Zielsetzung ist es dabei, eine kostengünstige und einfache Verkabelung zu erreichen. Beim Einsatz von Bussystemen in der Industrieautomation kann die Verkabelung aufgrund hoher Anforderungen z. B. eine gute Abschirmung, eine hohe Schutzklasse, eine hohe Temperaturbeständigkeit etc. sich für einen bedeutenden Anteil der Systemkosten verantwortlich zeichnen.

Bei der Verkabelung von Bussystemen in der Industrieautomation zur Energieversorgung der Bussystem-Teilnehmer ist zusätzlich zu beachten, dass die Energieversorgung der Aktoren getrennt von der Energieversorgung der Sensoren bzw. der Steuerung ausgeführt werden muss, um ein Abschalten der Aktoren unabhängig von den Sensoren bzw. der Steuerung durchführen zu können. Mit dieser Auslegung können die Aktoren im Automatisierungsnetzwerk durch Abschalten der Energieversorgung jederzeit in einen sicheren Zustand gebracht werden, wobei gleichzeitig die Energieversorgung für die Sensoren bzw. die Steuerung im Bussystem aufrechterhalten wird. Das Automatisierungsnetzwerk kann so weiter betrieben werden.

Nachfolgend wird ein System insbesondere zum Einsatz in der Industrieautomation beschrieben, bei dem mit einer Datenleitung, die minimal vieradrig ausgelegt sein muss, zwei differenziale Datensignale und zwei galvanisch getrennte Spannungen übertragen werden können. Dabei wird so vorgegangen, dass über ein erstes Adernpaar der Datenleitung ein erstes differenzielles Datensignal zwischen einer physikalischen Einspeisemodul-Schnittstelle und einer physikalischen Verbrauchermodul-Schnittstelle und ein erster Gleichstrom von einer ersten Gleichspannungsquelle zu einem ersten Verbrauchermodul-Gleichspannungsverbraucher übertragen werden. Ein zweites Adernpaar der Datenleitung überträgt dann ein zweites differenzielles Datensignal zwischen der physikalischen Einspeisemodul-Schnittstelle und der physikalischen Verbraucher-Modulschnittstelle und einen zweiten Gleichstrom von einer zweiten Gleichspannungsquelle zu einem zweiten Verbrauchermodul-Gleichspannungsverbraucher. Die Datenleitung ist dabei in Bezug auf die Datenübertragung bidirektional ausgelegt, um das erste bzw. zweite differenzielle Datensignal vom Einspeisemodul zum Verbrauchermodul bzw. umgekehrt zu übertragen.

Das erste Adernpaar der Datenleitung verbindet dabei die physikalische Einspeisemodul-Schnittstelle über einen ersten Einspeisemodul-Übertrager, eine erste kapazitive Einspeisemodul-Baugruppe, eine erste kapazitive Verbrauchermodul-Baugruppe und einen ersten Verbrauchermodul-Übertrager mit der physikalischen Verbrauchermodul-Schnittstelle. Weiterhin verbindet das erste Adernpaar die erste Gleichspannungsquelle über eine erste induktive Einspeisemodul-Baugruppe und eine erste induktive Verbrauchermodul-Baugruppe mit dem ersten Verbrauchermodul-Gleichspannungsverbraucher. Das zweite Adernpaar der Datenleitung verbindet die physikalische Einspeisemodul-Schnittstelle über einen zweiten Einspeisemodul-Übertrager, eine zweite kapazitive Einspeisemodul-Baugruppe, eine zweite kapazitive Verbrauchermodul-Baugruppe und einen zweiten Verbrauchermodul-Übertrager mit der physikalischen Verbrauchermodul-Schnittstelle. Das zweite Adernpaar verbindet ferner die zweite Gleichspannungsquelle über eine zweite induktive Einspeisemodul-Baugruppe und eine zweite induktive Verbrauchermodul-Baugruppe mit dem zweiten Verbrauchermodul-Gleichspannungsverbraucher.

Mit Hilfe der beiden induktiven und der beiden kapazitiven Baugruppen, die jeweils die Bussystem-Teilnehmer mit dem ersten bzw. dem zweiten Adernpaar der Datenleitung koppeln, kann auf jedem Adernpaar sowohl ein differenzielles Datensignal als auch ein Gleichstrom übertragen werden. Indem die beiden Gleichströme jeweils auf einem eigenständigen Adernpaar übertragen werden, sind die zugehörigen Gleichspannungen galvanisch voneinander getrennt und deshalb auch separat schaltbar. Damit kann das Bussystem in der Industrieautomation eingesetzt werden, da zwei separate Energieversorgungen, die eine Energieversorgung für die Aktoren und die andere Energieversorgung für die Sensoren bzw. die Steuerung, zur Verfügung gestellt werden. An die vieradrige Datenleitung selbst werden keine besonderen Anforderungen, die über die Anforderungen des zugrunde liegenden Übertragungssystems hinausgehen, gestellt. Das Bussystem kann dabei mit einer beliebigen Busstruktur wie mit einer Linien-, Ring-, Stern- oder Baumtopologie betrieben werden. Auch in Bezug auf das eingesetzte Busprotokoll bestehen keine Einschränkungen.

Im Folgenden wird eine Ausführung des Bussystems als echtzeitfähiger Ethernet-basierender Feldbus zum Einsatz in der Industrieautomation erläutert.

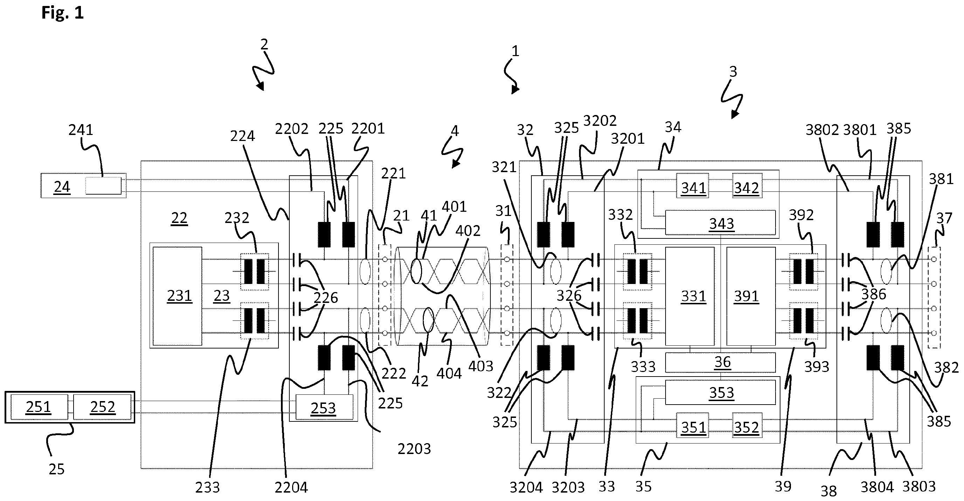

Figur 1 zeigt in schematischer Darstellung ein Bussystem 1 mit einem Einspeisemodul 2 und einem Verbrauchermodul 3, die über eine Datenleitung 4 miteinander verbunden sind. Die Datenleitung 4 umfasst vier Adern 401, 402, 403, 404, wobei jeweils zwei Adern ein verdrilltes Adernpaar 41, 42 bilden. Es besteht auch die Möglichkeit, alle vier Adern zusammen verdrillt, was zwar zu Nachteilen bei der elektromagnetische Verträglichkeit führt, aber den Vorteil einer höheren Flexibilität der Leitung hat. Das Einspeisemodul 2 und das Verbrauchermodul 3 weisen jeweils eine Kontaktstelle 21, 31 auf, die die Datenleitung 4 mit dem Einspeisemodul 1 bzw. dem Verbrauchermodul 3 verbindet. Die Kontaktstelle 21 des Einspeisemoduls 2 bzw. die Kon taktstelle 31 des Verbrauchermoduls 3 umfassen jeweils vier Anschlüsse, einen Anschluss für jede Ader der Datenleitung 4. Die Kontaktstelle 21 des Einspeisemoduls 2 bzw. die Kontaktstelle 31 des Verbrauchermoduls können dabei als Steckkontakt ausgebildet sein, die über entsprechende Gegenstücke an der Datenleitung 4 mit den beiden verdrillten Adernpaaren 41, 42 verbunden sind. Weiterhin ist eine Sensor- und Steuerungsversorgung 24 und eine Aktorversorgung 25 vorgesehen, die mit dem Einspeisemodul 2 verbunden sind.

Das Einspeisemodul 2 umfasst ferner eine Kopplereinheit 22 und eine Datenübertragungseinheit 23. Die Kopplereinheit 22 setzt sich aus vier Leitungsabschnitten 2201, 2202, 2203, 2204 zusammen, die jeweils mit einem Anschluss der Kontaktstelle 21 verbunden sind und einen ersten und einen zweiten Zweig aufweisen. Im ersten Zweig jedes Leitungsabschnittes 2201, 2202, 2203, 2204 ist eine Induktivität 225 und im zweiten Zweig eine Kapazität 226 angeordnet. Jeweils zwei Leitungsabschnitte 2201, 2202, 2203, 2204 der Kopplereinheit 22 bilden ein Leitungsabschnittspaar 221, 222, das einem entsprechenden Adernpaar 41, 42 der Datenleitung 4 zugeordnet ist.

Die ersten Zweige der beiden Leitungsabschnittpaare 221, 222 mit den Induktivitäten 225 bilden erste Klemmpunkte und die zweiten Zweige der beiden Leitungsabschnittpaare 221, 222 mit den Kapazitäten 226 bilden zweite Klemmpunkte. Die ersten Klemmpunkte des ersten Zweiges des ersten Leitungsabschnittpaars 221 sind mit der Sensor- und Steuerungsversorgung 24 verbunden, die ein Netzteil 241 zum Einprägen einer ersten Gleichspannung aufweist. Die ersten Klemmpunkte des ersten Zweiges des zweiten Leitungsabschnittpaares 222 sind über einen Strombegrenzer 253 mit der Aktorversorgung 25 verbunden, die eine zweite Gleichspannung einprägt, wobei die Aktorversorgung 25 ein Netzteil 251 und einen Schalter 252 aufweist. Die beiden zweiten Klemmpunkte der beiden zweiten Zweige der beiden Leitungsabschnittpaare 221, 222 sind über die Kapazitäten 226 mit der Datenübertragungseinheit 23 verbunden, um ein erstes und ein zweites differenzielles Datensignals zu übertragen.

Die Datenübertragungseinheit 23 weist einen so genannten Ethernet Physical Layer 231 auf, der eine physikalische Schnittstelle zwischen dem Einspeisemodul 2 und einer nachgeordneten Verarbeitungseinheit bildet und eine Kodierung bzw. Dekodierung von Daten vornimmt. Der Ethernet Physical Layer 231 stellt das erste und das zweite differenzielle Datensignal zur Verfügung. Das erste differenzielle Datensignal wird über einen ersten Übertrager 232 von bzw. zu den beiden zweiten Klemmpunkten des zweiten Zweiges des ersten Leitungsabschnittpaares 221 übertragen. Das zweite differenzielle Datensignal wird über einen zweiten Übertrager 233 an den beiden zweiten Klemmpunkten des zweiten Zweiges des zweiten Leitungsabschnittpaares 222 angelegt bzw. von dort empfangen.

Das Einspeisungsmodul 2 ermöglicht es so, über jeweils ein Leitungsabschnittpaar 221, 222 der Kopplereinheit 22 sowohl eine Gleichspannung als auch ein differenzielles Datensignal in ein zugeordnetes Adernpaar 41, 42 der Datenleitung 4 zu übertragen. Das erste Leitungsabschnittpaar 221 der Kopplereinheit 22 im Einspeisungsmodul 2 legt die erste Gleichspannung über die Kontaktstelle 21 am ersten Adernpaar 41 der Datenleitung 4 an und überträgt gleichzeitig das erste differenzielle Datensignal. Das zweite Leitungsabschnittpaar 222 der Kopplereinheit 22 im Einspeisungsmodul 2 koppelt parallel die zweite Gleichspannung über die Kopplungsstelle 21 in das zweite Adernpaar 42 der Datenleitung 4 ein und überträgt gleichzeitig das zweite differenzielle Datensignal.

Durch die im ersten Zweig jedes Leitungsabschnittes 2201, 2202, 2203, 2204 angeordnete Induktivität 225 und die im zweiten Zweig jedes Leitungsabschnittes 2201, 2202, 2203, 2204 angeordnete Kapazität 226 werden die beiden differenziellen Datensignale und die beiden Gleichspannungen voneinan der getrennt. Die Kapazitäten 226 blockieren dabei weitgehend die Gleichspannungen in den ersten Zweigen, während die Induktivitäten 225 die differenziellen Datensignale in den zweiten Zweigen im Wesentlichen unterdrücken. Die Induktivitäten bzw. die Kapazitäten sind dabei so ausgelegt, dass eine ausreichend starke Dämpfung der differenziellen Datensignale im ersten Zweig erfolgt und gleichzeitig aber auch niedrige Frequenzen im zweiten Zweig des Leitungsabschnittpaars passieren können, die sich z. B. durch einen Einsatz eines Autonegotiationsverfahrens oder den Baseline-Wander-Effekt ergeben.

Im Verbrauchermodul 3 schließt sich an die Kontaktstelle 31 eine zum Einspeisungsmodul komplementäre Anordnung an, die sich aus einer Kopplereinheit 32, einer Datenübertragungseinheit 33, einer Sensor- und Steuerungsversorgung 34 und einer Aktorversorgung 35 zusammensetzt. Die Kopplereinheit 32 setzt sich aus vier Leitungsabschnitten 3201, 3202, 3203, 3204 zusammen, die jeweils mit einem Anschluss der Kontaktstelle 31 verbunden sind und einen ersten und einen zweiten Zweig aufweisen. Im ersten Zweig jedes Leitungsabschnittes 3201, 3202, 3203, 3204 ist wiederum eine Induktivität 325 und im zweiten Zweig eine Kapazität 326 angeordnet. Jeweils zwei Leitungsabschnitte 3201, 3202, 3203, 3204 der Kopplereinheit 32 bilden ein Leitungsabschnittpaar 321, 322, das einem entsprechenden Adernpaar 41, 42 der Datenleitung 4 zugeordnet ist.

Die ersten Zweige der beiden Leitungsabschnittpaare 321, 322 mit den Induktivitäten 325 bilden erste Klemmpunkte und die zweiten Zweige der beiden Leitungsabschnittpaare 321, 322 mit den Kapazitäten 326 bilden zweite Klemmpunkte. Die ersten Klemmpunkte des ersten Zweiges des ersten Leitungsabschnittpaars 321 sind mit der Sensor- und Steuerungsversorgung 34 verbunden, um mit dem ersten von dem Einspeisemodul 2 auf das dem ersten Adernpaar 41 der Datenleitung 4 übertragenen Gleichstrom versorgt zu werden. Die ersten Klemmpunkte des ersten Zweiges des zweiten Leitungsabschnittpaares 322 sind mit der Aktorversorgung 35 verbunden, um mit dem zweiten von dem Einspeisemodul 2 auf das dem zweiten Adernpaar 42 der Datenleitung 4 übertragenen Gleichstrom versorgt zu werden.

An der Sensor- und Steuerungsversorgung 34 im Verbrauchermodul 3 liegt somit, abgesehen von den Spannungsverlusten, die durch die Übertragungsstrecke und die zwischengeschalteten Bauelemente verursacht werden, die erste Gleichspannung, die von der Sensor- und Energieversorgung 24 in das Einspeisemodul 2 eingeprägt wird, an. Die Aktorversorgung 35 im Verbrauchermodul 3 wird dagegen unter Berücksichtigung der Spannungsverluste bei der Übertragung und durch die zwischengeschalteten Bauelemente mit der zweiten Gleichspannung, die von der Aktorversorgung 25 an das Einspeisemodul 2 angelegt wird, versorgt.

Die Sensor- und Steuerungsversorgung 34 und die Aktorversorgung 35 im Verbrauchermodul 3 können, wie in Fig.1 gezeigt, jeweils einer Last 342, 352 vorgeschaltet, eine Blockiereinheit 341, 351 aufweisen. Die Blockiereinheit 341, 351 verhindert, dass eine Rückwärtsspeisung des Gleichstroms von der Last 342 in Sensor- und Steuerungsversorgung 34 bzw. der Last 352 in der Aktorversorgung 35 im Verbrauchermodul 3 zum Netzteil 241 in der Sensor- und Steuerungsversorgung 24 bzw. zum Netzteil 251 in der Aktorversorgung 25 im Einspeisemodul 2 erfolgt.

Die beiden zweiten Klemmpunkte der beiden zweiten Zweige der beiden Leitungsabschnittpaare 321, 322 sind mit einer Datenübertragungseinheit 33 verbunden, um das von dem Einspeisemodul 2 übertragene erste und das zweite differenzielle Datensignal zu empfangen bzw. das erste und zweite differenzielle Datensignal an das Einspeisemodul 2 zu senden. Die Datenübertragungseinheit 33 weist hierzu analog zur Datenübertragungseinheit 23 im Einspeisemodul 2 einen so genannten Ethernet Physical Layer 331 auf, der eine physikalische Schnittstelle zwischen dem Einspeisemodul 2 und einer nachgeordneten Verarbeitungseinheit 36 bildet und eine Kodierung bzw. Dekodierung von Daten vornimmt. Der Ethernet Physical Layer 331 empfängt bzw. sendet das erste differenzielle Datensignal über einen ersten Übertrager 332, der an den beiden zweiten Klemmpunkten des zweiten Zweiges des ersten Leitungsabschnittpaares 321 angeschlossen ist. Das zweite differenzielle Datensignal wird über einen zweiten Übertrager 333, der an den beiden zweiten Klemmpunkten des zweiten Zweiges des zweiten Leitungsabschnittpaares 322 angeschlossen ist, den Ethernet Physical Layer 331 übertragen.

Mit diesem Aufbau ist es somit möglich, über jeweils zwei vorzugsweise verdrillte Adern in der Datenleitung 4 zwischen dem Einspeisemodul 2 und dem Verbrauchermodul 3 parallel eine Gleichspannung und ein differenzielles Datensignal zu übertragen, wobei die beiden Gleichspannungen voneinander galvanisch getrennt sind.

Zum Einsatz des Bussystems 1 in der Industrieautomation ist es notwendig, die Energieversorgung der Aktoren im Bussystem über das zweite verdrillte Adernpaar 42 in der Datenleitung 4 schaltbar auszugestalten. Die Aktorversorgung 25 umfasst deshalb den Schalter 252, der dem Netzteil 251 nachgeordnet ist und der ein Abschalten der Aktorversorgung 25 unabhängig von der Sensoren- bzw. Steuerungsversorgung 24 ermöglicht. Durch das Abschalten der Aktorversorgung 25 können die Aktoren im Automatisierungsnetzwerk in einen sicheren Zustand gebracht werden, ohne dabei die Kommunikation unterbrechen zu müssen. Die Sensoren bzw. die Steuerung werden weiter mit dem ersten Gleichstrom von der Sensor- und Steuerungsversorgung 24 im Einspeisemodul 2 beliefert und sind über das erste und zweite differenzielle Datensignal ansprechbar.

Der Schalter 252 der Aktorversorgung 25 ist als prellarmer Schalter ausgebildet, um zu verhindern, dass der Schalter beim Betätigen aufgrund des mechanischen Aufbaus mehrfach schließt und öffnet. Ein solches mehrfaches Schließen und Öffnen führt zu einem erhöhten Kontaktabrieb und damit zu einem schnellen Ausfall, insbesondere dann, wenn gleichzeitig hohe Überströme auftreten. Als prellarmer Schalter kann beispielsweise ein RS-Flip-Flop verwendet werden.

Um zu verhindern, dass Schaltvorgänge der Aktorversorgung 25 die Datenkommunikation über das zweite verdrillte Adernpaar 42 stören, ist in das Einspeisemodul 2 der Strombegrenzer 253 integriert, der mit dem Schalter 252 der Aktorversorgung 25 verbunden ist. Mit dem Strombegrenzer 253 kann verhindert werden, dass ein beim Einschaltvorgang kurzfristig auftretender hoher Anlaufstrom des nachgeschalteten Verbrauchermoduls den zulässigen Sättigungsstrom der Induktivitäten 225 in den ersten Zweigen des zweiten Leitungsabschnittpaares 222 übersteigt und die Induktivitäten 225 ihre induktiven Eigenschaften nahezu vollständig verlieren. Dies würde dann dazu führen, dass das differenzielle Datensignal auf den zweiten Zweigen des zweiten Leitungsabschnittpaares 222 massiv beeinflusst wird und die Kommunikation über das zweite verdrillte Adernpaar 42 in der Datenleitung 4 zusammenbricht.

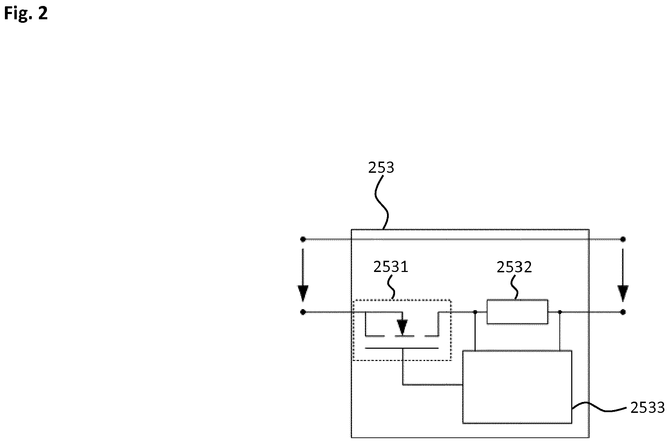

Figur 2 zeigt eine mögliche Auslegung des Strombegrenzers 253 zum Einsatz im Einspeisemodul 2. Der Strombegrenzer 253 weist am Eingang und am Ausgang jeweils zwei Klemmpunkte auf, die über zwei Durchleitungen miteinander verbunden sind. Die beiden Eingangsklemmpunkte des Strombegrenzers 253 können über den Schalter 252 mit dem Netzteil 251 der Aktorversorgung 25 des Eingangsmoduls 2 verbunden werden, wobei als Eingangsspannung die vom Schalter 252 übertragene Gleichspannung anliegt. Die beiden Ausgangsklemmpunkte des Strombegrenzers 253 können mit den ersten Zweigen des zweiten Leitungsabschnittpaars 224 der Kopplereinheit 22 verbunden werden, um die Induktivitäten 225 mit einer Ausgangsspannung zu beaufschlagen. Über die Durchleitungen im Strombegrenzer 253 fließt der von der nachgeordneten Last d. h. der von Aktorversorgung 35 im Verbrauchermodul 3 gezogene Gleichstrom.

In einem Durchleitungspfad ist weiter ausgehend vom Eingangsklemmpunkt eine Reihenschaltung aus einem Transistor 2531, der in der gezeigten Ausführungsform ein selbstsperrender N-Mosfet ist, und einen nachgeschalteten Messwiderstand 2532 angeordnet. Die am Gate des Transistors 2531 angelegte Gatespannung bestimmt dabei die über den Transistor 2531 abfallende Spannung. Parallel zum Messwiderstand 2532 ist weiter ein Regler 2533 geschaltet, der mit dem Gate des Transistors 2531 verbunden ist. Der Regler 2533 misst den über den Messwiderstand 2553 fließenden Strom und regelt die Gatespannung des Transistors 2531 so nach, dass abhängig vom gemessenen Gleichstrom über den Transistor 2531 eine gewünschte Spannung abfällt. Die Ausgangsspannung des Strombegrenzers 253 und damit der Ausgangsgleichstrom stellt sich dann entsprechend dem Spannungsabfall über den Transistor 2351 ein, so dass Überströme verhindert werden können.

Der Strombegrenzer 253 sorgt neben einer Begrenzung des Anlaufstroms auch für eine Begrenzung des maximalen Dauerstroms durch die Induktivitäten 225 in den ersten Zweigen des zweiten Leitungsabschnittpaares 222, soweit seine thermische Belastung es zulässt. Der maximal zulässige Dauerstrom durch die Induktivitäten 225 wird durch deren Ohmschen Widerstand und die thermischen Eigenschaften bestimmt. Wenn der maximal zulässige Dauerstrom dauerhaft überschritten wird, verlieren die Induktivitäten 225 ihre induktiven Eigenschaften und können zerstört werden. Der Einsatz eines Strombegrenzers ist in der Regel nur im Einspeisemodul notwendig.

In dem in Figur 1 gezeigten Verbrauchermodul 3 weist sowohl die Sensor- und Steuerungsversorgung 34 als auch die Aktorversorgung 35 eine Spannungsüberwachungseinheit 343, 353 auf, die jeweils an die zwei Durchleitungen in der Sensor- und Steuerungsversorgung 34 bzw. der Aktorversorgung 35 angeklemmt sind. Mit den beiden Spannungsüberwachungseinheiten 343, 353 kann überwacht werden, ob sowohl die Sensor- und Steuerungsversorgung als auch die Aktorversorgung im Verbrauchermodul jeweils im spezifizierten Bereich der Betriebsspannung arbeiten.

Bei dem in Figur 1 gezeigten Aufbau besteht die Möglichkeit, dass das Einspeisemodul 2 eine Reihe von hintereinander geschalteten Verbrauchermodulen versorgt, die dem in Figur 1 gezeigten Verbrauchermodul 3 entsprechen. Das Verbrauchermodul 3 ist, wie in Figur 1 dargestellt, im Wesentlichen symmetrisch aufgebaut, um die beiden vom Einspeisemodul 2 auf den beiden verdrillten Adernpaare 41, 42 der Datenleitung 4 gelieferten Gleichströme bzw. die beiden differenziellen Datensignale auf ein weiteres Verbrauchermodul (nicht gezeigt) zu übertragen. Das weitere Verbrauchermodul ist dabei wiederum über eine Datenleitung mit vier Adern, wobei jeweils zwei Adern ein verdrehtes Adernpaar bilden, an eine zweite Kontaktstelle 37 des Verbrauchermoduls 3 angeschlossen.

Das Verbrauchermodul 3 weist eine zweite Kopplereinheit 38 auf, die komplementär zur ersten Kopplereinheit 32 ausgelegt ist. Die zweite Kopplereinheit 38 setzt sich aus vier Leitungsabschnitten 3801, 3802, 3803, 3804 zusammen, die jeweils mit einem Anschluss der zweiten Kontaktstelle 37 verbunden sind und einen ersten und einen zweiten Zweig aufweisen. Im ersten Zweig jedes Leitungsabschnittes 3801, 3802, 3803, 3804 ist wiederum eine Induktivität 385 und im zweiten Zweig eine Kapazität 386 angeordnet. Jeweils zwei Leitungsabschnitte 3801, 3802, 3803, 3804 der Kopplereinheit 38 bilden ein Leitungsabschnittpaar 381, 382, das einem entsprechenden Adernpaar der über die zweite Kontaktstelle 37 anschließbaren Datenleitung zugeordnet ist.

Die ersten Zweige der beiden Leitungsabschnittpaare 381, 382 mit den Induktivitäten 385 bilden erste Klemmpunkte und die zweiten Zweige der beiden Leitungsabschnittpaare 381, 382 mit den Kapazitäten 386 bilden zweite Klemmpunkte. Die ersten Klemmpunkte des ersten Zweiges des ersten Leitungsabschnittpaars 221 sind mit der Sensor- und Steuerungsversorgung 34 verbunden, um die erste Gleichspannung anzulegen und so den von dem Einspeisemodul 2 gelieferten ersten Gleichstrom über das Leitungsabschnittpaar 381 an eine Sensor- und Steuerungsversorgung des nächsten Verbrauchermoduls (nicht gezeigt) zu übertragen. Die ersten Klemmpunkte des ersten Zweiges des zweiten Leitungsabschnittpaares 222 sind mit der Aktorversorgung 35 verbunden, die die zweite Gleichspannung einprägt. Der von dem Einspeisemodul 2 gelieferte zweite Gleichstrom wird so über das Leitungsabschnittpaar 382 an eine Aktorversorgung des nächsten Verbrauchermoduls (nicht gezeigt) weitergeleitet.

Die beiden zweiten Klemmpunkte der beiden zweiten Zweige der beiden Leitungsabschnittpaare 381, 382 sind mit einer zweiten Datenübertragungseinheit 39 verbunden, die das erste und zweite differenzielle Datensignal überträgt. Die zweite Datenübertragungseinheit 39 weist hierzu analog zur ersten Datenübertragungseinheit 33 im Verbrauchermodul 3 einen so genannten Ethernet Physical Layer 391 auf, der eine physikalische Schnittstelle zur Verarbeitungseinheit 36 darstellt und eine Kodierung bzw. Dekodierung von Daten vornimmt. Der Ethernet Physical Layer 391 sendet bzw. empfängt das erste differenzielle Datensignal über einen ersten Übertrager 392, der an den beiden zweiten Klemmpunkten des zweiten Zweiges des ersten Leitungsabschnittpaares 381 angeschlossen ist. Das zweite differenzielle Datensignal wird über einen zweiten Übertrager 393, der an den beiden zweiten Klemmpunkten des zweiten Zweiges des zweiten Leitungsabschnittpaares 382 angeschlossen ist, vom bzw. zum Ethernet Physical Layer 391 übertragen.

Der Ethernet Physical Layer 331 der ersten Übertragungseinheit 33 ist mit dem Ethernet Physical Layer 391 der zweiten Übertragungseinheit 39 über die zwischengeschaltete Verarbeitungseinrichtung 36 im Verbrauchermodul 3 verbunden. Die beiden differenziellen Datensignale können so nach Verarbeitung durch die zwischengeschaltete Verarbeitungseinrichtung 36 vom ersten Ethernet Physical Layer 331 auf den zweiten Ethernet Physical Layer 391 und zurück übertragen und damit durch das Verbrauchermodul 3 hindurch geschleift und zu bzw. von einer Datenübertragungseinheit des nächsten Verbrauchermoduls (nicht gezeigt) übertragen werden.

Im Einspeisemodul bzw. den Verbrauchermodulen des Bussystems werden jeweils Kopplereinheiten mit einer Kombination aus induktiven und kapazitiven Baugruppen eingesetzt, um zwei galvanisch getrennte Gleichspannungen an einer vieradrigen Datenleitung anzulegen. Mit nur einer einzelnen Verkabelung, die aus der vieradrigen Datenleitung besteht, können parallel zwei galvanisch getrennte Gleichströme zusätzlich zu zwei differenziellen Datensignalen auf die beiden Adernpaare der Datenleitung übertragen werden. Die Funktionalität des Bussystems wird nicht verändert.

Beim Einsatz der Ethernet-Übertragungsphysik werden die Auslegung der Kapazitäten in dem Leitungsabschnittpaar der Kopplereinheit durch die untere Grenzfrequenz des zu übertragenden differenziellen Datensignals bestimmt, welche wiederum durch den Autonegotiationsprozess vorgeben wird. Diese Grenzfrequenz liegt bei ca. 2 MHz. Die Kapazitäten müssen dann so ausgelegt werden, das sie bei dieser Grenzfrequenz noch nicht in die Sättigung gehen, so dass Kapazitäten mit 470 nF benötigt werden. Bevorzugt ist dabei eine Implementierung mit Kapazitäten 1 µF, um eventuelle Effekte einer schwankenden Versorgungsspannung auszugleichen.

Bei der Auslegung der Induktivitäten der Kopplereinheit insbesondere im Verbrauchermodul ist entscheidend, ob wie in Figur 1 gezeigt, eine Durchleitung der beiden Gleichspannungen erfolgt, sodass die Induktivitäten der beiden Kopplereinheiten im Verbrauchermodul miteinander in Verbindung stehen. Dadurch werden auch die beiden differenziellen Datensignale gekoppelt. Die Induktivitäten der Kopplereinheiten müssen dann so gewählt werden, das Übersprechen verhindert wird. Darüber hinaus sind auch die Eigenschaften der Ethernet Physical Layer in der Datenübertragungseinheit für die Auslegung der Induktivitäten von Bedeutung. In einer Implementierung wird eine Induktivität von größer 3µH, vorzugsweise 6,8 µH verwendet.

## Patentansprüche

1. Bussystem (1) mit
einem Einspeisemodul (2), das mit einer ersten Gleichspannungsquelle (241) und einer zweiten Gleichspannungsquelle (251) verbunden ist und eine physikalische Schnittstelle (231), einen ersten Übertrager (232), einen zweiten Übertrager (233), eine erste induktive Baugruppe (225), eine zweite induktive Baugruppe (225), eine erste kapazitive Baugruppe (226) und eine zweite kapazitive Baugruppe (226) aufweist, einem Verbrauchermodul (3), das einen ersten Gleichspannungsverbraucher (34), einen zweiten Gleichspannungsverbraucher (35), eine physikalische Schnittstelle (331), einen ersten Übertrager (332), einen zweiten Übertrager (333), eine erste induktive Baugruppe (325), eine zweite induktive Baugruppe (325), eine erste kapazitive Baugruppe (326) und eine zweite kapazitive Baugruppe (326) aufweist,
einer Datenleitung (4), die einen ersten Kanal mit einem ersten Adernpaar (41) und einen zweiten Kanal mit einem zweiten Adernpaar (42) aufweist,
wobei der erste Kanal der Datenleitung (4) die physikalische Einspeisemodul-Schnittstelle (231) über den ersten Einspeisemodul-Übertrager (232), die erste kapazitive Einspeisemodul-Baugruppe (226), die erste kapazitive Verbrauchermodul-Baugruppe (326) und den ersten Verbrauchermodul-Übertrager (332) mit der physikalischen Verbrauchermodul-Schnittstelle (331) und die erste Gleichspannungsquelle (241) über die erste induktive Einspeisemodul-Baugruppe (225) und die erste induktive Verbrauchermodul-Baugruppe (325) mit dem ersten Verbrauchermodul-Gleichspannungsverbraucher (34) verbindet, um ein erstes differenzielles Datensignal zwischen der physikalischen Einspeisemodul-Schnittstelle (231) und der physikalischen Verbrauchermodul-Schnittstelle (331) und einen ersten Gleichstrom von der ersten Gleichspannungsquelle zu dem ersten Verbrauchermodul-Gleichspannungsverbraucher (34) zu übertragen,
wobei der zweite Kanal der Datenleitung (4) die physikalische Einspeisemodul-Schnittstelle (231) über den zweiten Einspeisemodul-Übertrager (233), die zweite kapazitive Einspeisemodul-Baugruppe (226), die zweite kapazitive Verbrauchermodul-Baugruppe (326) und den zweiten Verbrauchermodul-Übertrager (333) mit der physikalischen Verbrauchermodul-Schnittstelle (331) und die zweite Gleichspannungsquelle (251) über die zweite induktive Einspeisemodul-Baugruppe (225) und die zweite induktive Verbrauchermodul-Baugruppe (325) mit dem zweiten Verbrauchermodul-Gleichspannungsverbraucher (35) verbindet, um ein zweites differenzielles Datensignal zwischen der physikalischen Einspeisemodul-Schnittstelle (231) und der physikalischen Verbrauchermodul-Schnittstelle (331) und einen zweiten Gleichstrom von der zweiten Gleichspannungsquelle zu dem zweiten Verbrauchermodul-Gleichspannungsverbraucher (35) zu übertragen, **dadurch gekennzeichnet, dass** der erste Gleichstrom und der zweite Gleichstrom galvanisch getrennt über die vieradrigen Datenleitung (4) geführt wird, um eine separate Energieversorgung des ersten Verbrauchermodul-Gleichspannungsverbraucher (34) durch die erste Gleichspannungsquelle (241) und des zweiten Verbrauchermodul-Gleichspannungsverbraucher (35) durch die zweiten Gleichspannungsquelle (251) sicherzustellen.

2. Bussystem (1) nach Anspruch 1, wobei wenigstens einer der beiden von der ersten Gleichspannungsquelle (241) oder von der zweiten Gleichspannungsquelle (251) zu dem ersten Verbrauchermodul-Gleichspannungsverbraucher (34) oder zu dem zweiten Verbrauchermodul-Gleichspannungsverbraucher (35) übertragenen Gleichströme schaltbar ist, wobei das Einspeisemodul (2) weiter einen Strombegrenzer (253) für die dem schaltbaren Gleichstrom zugeordnete Gleichspannungsquelle (251) aufweist.

3. Bussystem (1) nach Anspruch 2, wobei der Strombegrenzer (253) eine Reihenschaltung aus einem Transistor (2531) und einem Messwiderstand, durch die der zweite Gleichstrom fließt, und einen Regler aufweist, wobei der Regler ausgelegt ist, den durch den Messwiderstand fließend Gleichstrom zu erfassen und den Transistor (2531) so anzusteuern, dass der über den Transistor (2531) fließende Gleichstrom einen vorgegebenen Grenzwert nicht überschreitet.

4. Bussystem (1) nach Anspruch 2 oder 3, wobei ein prellarmer Schalter (252) zwischen der zweiten Gleichspannungsquelle (251) und dem Strombegrenzer (253) des Einspeisemoduls (2) angeordnet ist.

5. Bussystem (1) nach einem der Ansprüche 1 bis 4, wobei das Verbrauchermodul (3) eine Verarbeitungseinheit (36), eine weitere physikalische Schnittstelle (391), einen dritten Übertrager (392), einen vierten Übertrager (393), eine dritte induktive Baugruppe (385) und eine vierte induktive Baugruppe (385), eine dritte kapazitive Baugruppe (386) und eine vierte kapazitive Baugruppe (386) aufweist,
wobei die Verarbeitungseinheit (36) die physikalische Verbrauchermodul-Schnittstelle (331) mit der weiteren physikalischen Verbrauchermodul-Schnittstelle (391) verbindet, um das erste differenzielle Datensignal und das zweite differenzielle Datensignal zu übertragen,
wobei der erste Verbrauchermodul-Gleichspannungsverbraucher (34) die erste induktive Verbrauchermodul-Baugruppe (325) mit der dritten induktiven Verbrauchermodul-Baugruppe (385) verbindet, um den ersten Gleichstrom zu übertragen, und
wobei der zweite Verbrauchermodul-Gleichspannungsverbraucher (35) die zweite induktive Verbrauchermodul-Baugruppe (325) mit der vierten induktiven Verbrauchermodul-Baugruppe (385) verbindet, um den zweiten Gleichstrom zu übertragen.

6. Bussystem (1) nach einem der Ansprüche 1 bis 5, wobei das Verbrauchermodul (3) eine Spannungsüberwachungsbaugruppe (343, 353) aufweist, die mit dem ersten Verbrauchermodul-Gleichspannungsverbraucher (34) und dem zweiten Verbrauchermodul-Gleichspannungsverbraucher (35) verbunden ist, um zu überwachen, ob der erste Verbrauchermodul-Gleichspannungsverbraucher (34) und der zweite Verbrauchermodul-Gleichspannungsverbraucher (35) jeweils in einem spezifizierten Bereich der Betriebsspannung arbeiten.

7. Bussystem (1) nach einem der Ansprüche 1 bis 6, wobei das erste differenzielle Datensignal und das zweite differenzielle Datensignal jeweils differenzielle Ethernet-Signale sind.

8. Bussystem (1) nach einem der Ansprüche 1 bis 7 zum Einsatz in der Industrieautomation, wobei der erste Verbrauchermodul-Gleichspannungsverbraucher (34) ein Sensor und/oder eine Steuerung und der zweite Verbrauchermodul-Gleichspannungsverbraucher (35) ein Aktor ist.

9. Einspeisemodul (2) für ein Bussystem (1), das eine erste Gleichspannungsquelle (241) und eine zweite Gleichspannungsquelle (251) aufweist, mit einer physikalischen Schnittstelle (231), einem ersten Übertrager (232), einem zweiten Übertrager (233), einer ersten induktiven Baugruppe (225), einer zweiten induktiven Baugruppe (225), einer ersten kapazitiven Baugruppe (226), einer zweiten kapazitiven Baugruppe (226) und einem Anschluss (21) für eine Datenleitung (4), die eine erste Kontaktstelle für einen ersten Kanal mit einem ersten Adernpaar (41) und eine zweite Kontaktstelle für einen zweiten Kanal mit einem zweiten Adernpaar (42) aufweist,
wobei die physikalische Einspeisemodul-Schnittstelle (231) ausgelegt ist, über den ersten Einspeisemodul-Übertrager (232) und die erste kapazitive Einspeisemodul-Baugruppe (226) ein erstes differenzielles Datensignal zu oder von der ersten Kontaktstelle für den ersten Kanal der Datenleitung (4) und über den zweiten Einspeisemodul-Übertrager (233) und die zweite kapazitive Einspeisemodul-Baugruppe (226) ein zweites differenzielles Datensignal zu oder von der zweiten Kontaktstelle für den zweiten Kanal der Datenleitung (4) zu übertragen,
wobei die erste Gleichspannungsquelle (241) ausgelegt ist, über die erste induktive Einspeisemodul-Baugruppe (225) eine erste Gleichspannung an der ersten Kontaktstelle für den ersten Kanal der Datenleitung (4) anzulegen,
wobei die zweite Gleichspannungsquelle (251) ausgelegt ist, über die zweite induktive Einspeisemodul-Baugruppe (225) eine zweite Gleichspannung an der zweiten Kontaktstelle für den zweiten Kanal der Datenleitung (4) anzulegen, **dadurch gekennzeichnet, dass** die erste Gleichspannung und die zweite Gleichspannung galvanisch getrennt sind.

10. Einspeisemodul (2) nach Anspruch 9, wobei wenigstens einer der beiden von der ersten oder von der zweiten Gleichspannungsquelle (241, 251) übertragenen Gleichströme schaltbar ist, und wobei ein Strombegrenzer (253) für die dem schaltbaren Gleichstrom zugeordneten Gleichspannungsquelle (251) vorgesehen ist.

11. Einspeisemodul (2) nach Anspruch 10, wobei der Strombegrenzer (253) eine Reihenschaltung aus einem Transistor (2531) und einem Messwiderstand, durch die der zweite Gleichstrom fließt, und einen Regler aufweist, wobei der Regler ausgelegt ist, den durch den Messwiderstand fließend Gleichstrom zu erfassen und den Transistor (2531) so anzusteuern, dass der über den Transistor (2531) fließende Gleichstrom einen vorgegebenen Grenzwert nicht überschreitet.

12. Einspeisemodul (2) nach Anspruch 10 oder 11, wobei ein prellarmer Schalter (252) zwischen der zweiten Gleichspannungsquelle (251) und dem Strombegrenzer (253) des Einspeisemoduls (2) angeordnet ist.

13. Verbrauchermodul (3) für ein Bussystem (1) mit einem ersten Gleichspannungsverbraucher (34), einem zweiten Gleichspannungsverbraucher (35), einer physikalischen Schnittstelle (331), einem ersten Übertrager (332), einem zweiten Übertrager (333), einer ersten induktiven Baugruppe (325), einer zweiten induktiven Baugruppe (325), einer ersten kapazitiven Baugruppe (326) und einer zweiten kapazitiven Baugruppe (326), und einem Anschluss (31) für eine Datenleitung (4), die eine erste Kontaktstelle für einen ersten Kanal mit einem ersten Adernpaar (41) und eine zweite Kontaktstelle für einen zweiten Kanal mit einem zweiten Adernpaar (42) aufweist,
wobei die physikalische Verbrauchermodul-Schnittstelle (331) ausgelegt ist, über den ersten Verbrauchermodul-Übertrager (332) und die erste kapazitive Verbrauchermodul-Baugruppe ein erstes differenzielles Datensignal zu oder von der ersten Kontaktstelle für den ersten Kanal der Datenleitung (4) und über den zweiten Verbrauchermodul-Übertrager (333) und die zweite kapazitive Verbrauchermodul-Baugruppe ein zweites differenzielles Datensignal zu oder von der zweiten Kontaktstelle für den zweiten Kanal der Datenleitung (4) zu empfangen, wobei der erste Verbrauchermodul-Gleichspannungsverbraucher (34) ausgelegt ist, über die erste induktive Verbrauchermodul-Baugruppe (325) eine erste Gleichspannung an der ersten Kontaktstelle für den ersten Kanal der Datenleitung (4) zu übertragen,
wobei der zweite Verbrauchermodul-Gleichspannungsverbraucher (35) ausgelegt ist, über die zweite induktive Verbrauchermodul-Baugruppe (325) eine zweite Gleichspannung an der zweiten Kontaktstelle für den zweiten Kanal der Datenleitung (4) zu empfangen, **dadurch gekennzeichnet, dass** die erste Gleichspannung und die zweite Gleichspannung galvanisch getrennt sind.

14. Verbrauchermodul (3) nach Anspruch 13, das weiter eine Verarbeitungseinheit (36), eine weitere physikalische Schnittstelle (391), einen dritten Übertrager (392), einen vierten Übertrager (393), eine dritte induktive Baugruppe (385) und eine vierte induktive Baugruppe (385), eine dritte kapazitive Baugruppe (386) und eine vierte kapazitive Baugruppe (386) aufweist,
wobei die physikalische Verbrauchermodul-Schnittstelle (331) mit der weiteren physikalischen Verbrauchermodul-Schnittstelle (391) verbunden ist, um das erste differenzielle Datensignal und das zweite differenzielle Datensignal zu übertragen,
wobei der erste Verbrauchermodul-Gleichspannungsverbraucher (34) die erste induktive Verbrauchermodul-Baugruppe (325) mit der dritten induktiven Verbrauchermodul-Baugruppe (385) verbindet, um den ersten Gleichstrom zu übertragen, und
wobei der zweite Verbrauchermodul-Gleichspannungsverbraucher (35) die zweite induktive Verbrauchermodul-Baugruppe (325) mit der vierten induktiven Verbrauchermodul-Baugruppe (385) verbindet, um den zweiten Gleichstrom zu übertragen.

15. Verbrauchermodul (3) nach Anspruch 13 oder 14, wobei eine Spannungsüberwachungsbaugruppe (343, 353) vorgesehen ist, die mit dem ersten Verbrauchermodul-Gleichspannungsverbraucher (34) und dem zweiten Verbrauchermodul-Gleichspannungsverbraucher (35) verbunden ist, um zu überwachen, ob der erste Verbrauchermodul-Gleichspannungsverbraucher (34) und der zweite Verbrauchermodul-Gleichspannungsverbraucher (35) jeweils in einem spezifizierten Bereich der Betriebsspannung arbeiten.

## Claims

1. Bus system (1) comprising
a feed module (2) which is connected to a first DC voltage source (241) and to a second DC voltage source (251) and has a physical interface (231), a first transformer (232), a second transformer (233), a first inductive assembly (225), a second inductive assembly (225), a first capacitive assembly (226) and a second capacitive assembly (226), a consumer module (3) which has a first DC voltage consumer (34), a second DC voltage consumer (35), a physical interface (331), a first transformer (332), a second transformer (333), a first inductive assembly (325), a second inductive assembly (325), a first capacitive assembly (326) and a second capacitive assembly (326),
a data line (4) which has a first channel with a first pair of wires (41) and a second channel with a second pair of wires (42),
wherein the first channel of the data line (4) connects the physical feed module interface (231) to the physical consumer module interface (331) via the first feed module transformer (232), the first capacitive feed module assembly (226), the first capacitive consumer module assembly (326) and the first consumer module transformer (332), and connects the first DC voltage source (241) to the first consumer module DC voltage consumer (34) via the first inductive feed module assembly (225) and the first inductive consumer module assembly (325), in order to transmit a first differential data signal between the physical feed module interface (231) and the physical consumer module interface (331) and to transmit a first direct current from the first DC voltage source to the first consumer module DC voltage consumer (34),
wherein the second channel of the data line (4) connects the physical feed module interface (231) to the physical consumer module interface (331) via the second feed module transformer (233), the second capacitive feed module assembly (226), the second capacitive consumer module assembly (326) and the second consumer module transformer (333), and connects the second DC voltage source (251) to the second consumer module DC voltage consumer (35) via the second inductive feed module assembly (225) and the second inductive consumer module assembly (325), in order to transmit a second differential data signal between the physical feed module interface (231) and the physical consumer module interface (331) and to transmit a second direct current from the second DC voltage source to the second consumer module DC voltage consumer (35) **characterized in that**
the first direct current and the second direct current are carried via the four-wire data line (4) and DC-isolated in order to ensure a separate supply of energy to the first consumer module DC voltage consumer (34) by the first DC voltage source (241) and to the second consumer module DC voltage consumer (35) by the second DC voltage source (251).

2. Bus system (1) according to Claim 1, wherein at least one of the two direct currents which is transmitted from the first DC voltage source (241) or from the second DC voltage source (251) to the first consumer module DC voltage consumer (34) or to the second consumer module DC voltage consumer (35) can be switched, wherein the feed module (2) further has a current limiter (253) for the DC voltage source (251) which is associated with the switchable direct current.

3. Bus system (1) according to Claim 2, wherein the current limiter (253) has a series circuit comprising a transistor (2531) and a measurement resistor, through which the second direct current flows, and has a controller, wherein the controller is designed to detect the direct current flowing through the measurement resistor and to drive the transistor (2531) such that the direct current flowing across the transistor (2531) does not exceed a prespecified limit value.

4. Bus system (1) according to Claim 2 or 3, wherein a low-bounce switch (252) is arranged between the second DC voltage source (251) and the current limiter (253) of the feed module (2).

5. Bus system (1) according to any one of Claims 1 to 4, wherein the consumer module (3) has a processing unit (36), a further physical interface (391), a third transformer (392), a fourth transformer (393), a third inductive assembly (385) and a fourth inductive assembly (385), a third capacitive assembly (386) and a fourth capacitive assembly (386),
wherein the processing unit (36) connects the physical consumer module interface (331) to the further physical consumer module interface (391) in order to transmit the first differential data signal and the second differential data signal,
wherein the first consumer module DC voltage consumer (34) connects the first inductive consumer module assembly (325) to the third inductive consumer module assembly (385) in order to transmit the first direct current, and
wherein the second consumer module DC voltage consumer (35) connects the second inductive consumer module assembly (325) to the fourth inductive consumer module assembly (385) in order to transmit the second direct current.

6. Bus system (1) according to any one of Claims 1 to 5, wherein the consumer module (3) has a voltage monitoring assembly (343, 353) which is connected to the first consumer module DC voltage consumer (34) and to the second consumer module DC voltage consumer (35) in order to monitor whether the first consumer module DC voltage consumer (34) and the second consumer module DC voltage consumer (35) are each operating in a specified range of the operating voltage.

7. Bus system (1) according to any one of Claims 1 to 6, wherein the first differential data signal and the second differential data signal are each differential Ethernet signals.

8. Bus system (1) according to any one of Claims 1 to 7 for use in industrial automation, wherein the first consumer module DC voltage consumer (34) is a sensor and/or a controller, and the second consumer module DC voltage consumer (35) is an actuator.

9. Feed module (2) for a bus system (1) which has a first DC voltage source (241) and a second DC voltage source (251), comprising a physical interface (231), a first transformer (232), a second transformer (233), a first inductive assembly (225), a second inductive assembly (225), a first capacitive assembly (226), a second capacitive assembly (226) and a connection (21) for a data line (4) which has a first contact point for a first channel with a first pair of wires (41) and has a second contact point for a second channel with a second pair of wires (42),
wherein the physical feed module interface (231) is designed to transmit a first differential data signal to or from the first contact point for the first channel of the data line (4) via the first feed module transformer (232) and the first capacitive feed module assembly (226), and to transmit a second differential data signal to or from the second contact point for the second channel of the data line (4) via the second feed module transformer (233) and the second capacitive feed module assembly (226),
wherein the first DC voltage source (241) is designed to apply a first DC voltage to the first contact point for the first channel of the data line (4) via the first inductive feed module assembly (225),
wherein the second DC voltage source (251) is designed to apply a second DC voltage to the second contact point for the second channel of the data line (4) via the second inductive feed module assembly (225), **characterized in that** the first DC voltage and the second DC voltage are DC-isolated.

10. Feed module (2) according to Claim 9, wherein at least one of the two direct currents which is transmitted from the first or from the second DC voltage source (241, 251) can be switched, and wherein a current limiter (253) is provided for the DC voltage source (251) which is associated with the switchable direct current.

11. Feed module (2) according to Claim 10, wherein the current limiter (253) has a series circuit comprising a transistor (2531) and a measurement resistor, through which the second direct current flows, and has a controller, wherein the controller is designed to detect the direct current flowing through the measurement resistor and to drive the transistor (2531) such that the direct current flowing across the transistor (2531) does not exceed a prespecified limit value.

12. Feed module (2) according to Claim 10 or 11, wherein a low-bounce switch (252) is arranged between the second DC voltage source (251) and the current limiter (253) of the feed module (2).

13. Consumer module (3) for a bus system (1), comprising a first DC voltage consumer (34), a second DC voltage consumer (35), a physical interface (331), a first transformer (332), a second transformer (333), a first inductive assembly (325), a second inductive assembly (325), a first capacitive assembly (326) and a second capacitive assembly (326), and a connection (31) for a data line (4) which has a first contact point for a first channel with a first pair of wires (41) and has a second contact point for a second channel with a second pair of wires (42),
wherein the physical consumer module interface (331) is designed to receive a first differential data signal to or from the first contact point for the first channel of the data line (4) via the first consumer module transformer (332) and the first capacitive consumer module assembly, and to receive a second differential data signal to or from the second contact point for the second channel of the data line (4) via the second consumer module transformer (333) and the second capacitive consumer module assembly,
wherein the first consumer module DC voltage consumer (34) is designed to transmit a first DC voltage to the first contact point for the first channel of the data line (4) via the first inductive consumer module assembly (325),
wherein the second consumer module DC voltage consumer (35) is designed to receive a second DC voltage at the second contact point for the second channel of the data line (4) via the second inductive consumer module assembly (325), **characterized in that**
the first DC voltage and the second DC voltage are DC-isolated.

14. Consumer module (3) according to Claim 13, which further has a processing unit (36), a further physical interface (391), a third transformer (392), a fourth transformer (393), a third inductive assembly (385) and a fourth inductive assembly (385), a third capacitive assembly (386) and a fourth capacitive assembly (386), wherein the physical consumer module interface (331) is connected to the further physical consumer module interface (391) in order to transmit the first differential data signal and the second differential data signal,
wherein the first consumer module DC voltage consumer (34) connects the first inductive consumer module assembly (325) to the third inductive consumer module assembly (385) in order to transmit the first direct current, and
wherein the second consumer module DC voltage consumer (35) connects the second inductive consumer module assembly (325) to the fourth inductive consumer module assembly (385) in order to transmit the second direct current.

15. Consumer module (3) according to Claim 13 or 14, wherein a voltage monitoring assembly (343, 353) is provided, which voltage monitoring assembly is connected to the first consumer module DC voltage consumer (34) and to the second consumer module DC voltage consumer (35) in order to monitor whether the first consumer module DC voltage consumer (34) and the second consumer module DC voltage consumer (35) are each operating in a specified range of the operating voltage.

## Revendications

1. Système de bus (1) avec un module d'alimentation (2), lequel est raccordé à une première source de tension continue (241) et une deuxième source de tension continue (251) et présente une interface physique (231), un premier transmetteur (232), un deuxième transmetteur (233), un premier ensemble inductif (225), un deuxième ensemble inductif (225), un premier ensemble capacitif (226) et un deuxième ensemble capacitif (226), un module de consommateur (3) qui présente un premier consommateur de tension continue (34), un deuxième consommateur de tension continue (35), une interface physique (331), un premier transmetteur (332), un deuxième transmetteur (333), un premier ensemble inductif (325), un deuxième ensemble inductif (325), un premier ensemble capacitif (326) et un deuxième ensemble capacitif (326), une ligne de données (4) qui présente un premier canal avec une première paire de brins (41) et un deuxième canal avec une deuxième paire de brins (42),
dans lequel le premier canal de la ligne de données (4) raccorde l'interface de module d'alimentation physique (231) via le premier transmetteur de module d'alimentation (232), le premier ensemble de module d'alimentation capacitif (226), le premier ensemble de module de consommateur capacitif (326) et le premier transmetteur de module de consommateur (332) à l'interface de module de consommateur physique (331), et la première source de tension continue (241) via le premier ensemble de module d'alimentation inductif (225) et le premier ensemble de module de consommateur inductif (325) au premier consommateur de tension continue de module de consommateur (34) pour transmettre un premier signal de données différentiel entre l'interface de module d'alimentation physique (231) et l'interface de module de consommateur physique (331) et un premier courant continu de la première source de tension continue vers le premier consommateur de tension continue de module de consommateur (34),
dans lequel le deuxième canal de la ligne de données (4) raccorde l'interface de module d'alimentation physique (231) via le deuxième transmetteur de module d'alimentation (233), le deuxième ensemble de module d'alimentation capacitif (226), le deuxième ensemble de module de consommateur capacitif (326) et le deuxième transmetteur de module de consommateur (333) à l'interface de module de consommateur physique (331), et la deuxième source de tension continue (251) via le deuxième ensemble de module d'alimentation inductif (225) et le deuxième ensemble de module de consommateur inductif (325) au deuxième consommateur de tension continue de module de consommateur (35) pour transmettre un deuxième signal de données différentiel entre l'interface de module d'alimentation physique (231) et l'interface de module de consommateur physique (331) et un deuxième courant continu de la deuxième source de tension continue vers le deuxième consommateur de tension continue de module de consommateur (35),
**caractérisé en ce que** le premier courant continu et le deuxième courant continu sont conduits de manière séparée galvaniquement via la ligne de données à quatre brins (4) pour garantir une alimentation en énergie séparée du premier consommateur de tension continue de module de consommateur (34) par la première source de tension continue (241) et du deuxième consommateur de tension continue de module de consommateur (35) par la deuxième source de tension continue (251).

2. Système de bus (1) selon la revendication 1, dans lequel au moins l'un des deux courants continus transmis par la première source de tension continue (241) ou par la deuxième source de tension continue (251) au premier consommateur de tension continue de module de consommateur (34) ou au deuxième consommateur de tension continue de module de consommateur (35) peut être commuté, dans lequel le module d'alimentation (2) présente en outre un limiteur de courant (253) pour la source de tension continue (251) associée au courant continu commutable.

3. Système de bus (1) selon la revendication 2, dans lequel le limiteur de courant (253) présente un couplage en série d'un transistor (2531) et d'une résistance de précision, à travers lequel circule le deuxième courant continu, et un régulateur, dans lequel le régulateur est étudié pour détecter le courant continu circulant à travers la résistance de précision et commander le transistor (2531) de telle sorte que le courant continu circulant à travers le transistor (2531) ne dépasse pas une valeur de seuil prescrite.

4. Système de bus (1) selon la revendication 2 ou 3, dans lequel un commutateur à faible rebondissement (252) est disposé entre la deuxième source de tension continue (251) et le limiteur de courant (253) du module d'alimentation (2).

5. Système de bus (1) selon l'une des revendications 1 à 4, dans lequel le module de consommateur (3) présente une unité de traitement (36), une autre interface physique (391), un troisième transmetteur (392), un quatrième transmetteur (393), un troisième ensemble inductif (385) et un quatrième ensemble inductif (385), un troisième ensemble capacitif (386) et un quatrième ensemble capacitif (386),
dans lequel l'unité de traitement (36) raccorde l'interface de module de consommateur physique (331) à l'autre interface de module de consommateur physique (391) pour transmettre le premier signal de données différentiel et le deuxième signal de données différentiel,
dans lequel le premier consommateur de tension continue de module de consommateur (34) raccorde le premier ensemble de module de consommateur inductif (325) au troisième ensemble de module de consommateur inductif (385) pour transmettre le premier courant continu, et
dans lequel le deuxième consommateur de tension continue de module de consommateur (35) raccorde le deuxième ensemble de module de consommateur inductif (325) au quatrième ensemble de module de consommateur inductif (385) pour transmettre le deuxième courant continu.

6. Système de bus (1) selon l'une des revendications 1 à 5, dans lequel le module de consommateur (3) présente un ensemble de surveillance de tension (343, 353) qui est raccordé au premier consommateur de tension continue de module de consommateur (34) et au deuxième consommateur de tension continue de module de consommateur (35) pour surveiller si le premier consommateur de tension continue de module de consommateur (34) et le deuxième consommateur de tension continue de module de consommateur (35) travaillent respectivement dans une plage spécifiée de la tension de service.

7. Système de bus (1) selon l'une des revendications 1 à 6, dans lequel le premier signal de données différentiel et le deuxième signal de données différentiel sont respectivement des signaux Ethernet différentiels.

8. Système de bus (1) selon l'une des revendications 1 à 7 pour l'utilisation dans l'automatisation industrielle, dans lequel le premier consommateur de tension continue de module de consommateur (34) est un capteur et/ou une commande, et le deuxième consommateur de tension continue de module de consommateur (35) est un actionneur.

9. Module d'alimentation (2) pour un système de bus (1), lequel présente une première source de tension continue (241) et une deuxième source de tension continue (251) avec une interface physique (231), un premier transmetteur (232), un deuxième transmetteur (233), un premier ensemble inductif (225), un deuxième ensemble inductif (225), un premier ensemble capacitif (226), un deuxième ensemble capacitif (226) et un raccordement (21) pour une ligne de données (4) qui présente un premier point de contact pour un premier canal avec une première paire de brins (41) et un deuxième point de contact pour un deuxième canal avec une deuxième paire de brins (42),
dans lequel l'interface de module d'alimentation physique (231) est étudiée pour transmettre, via le premier transmetteur de module d'alimentation (232) et le premier ensemble de module d'alimentation capacitif (226), un premier signal de données différentiel à l'attention du ou à partir du premier point de contact pour le premier canal de la ligne de données (4), et via le deuxième transmetteur de module d'alimentation (233) et le deuxième ensemble de module d'alimentation capacitif (226), un deuxième signal de données différentiel à l'attention du ou à partir du deuxième point de contact pour le deuxième canal de la ligne de données (4),
dans lequel la première source de tension continue (241) est étudiée pour appliquer, via le premier ensemble de module d'alimentation inductif (225), une première tension continue au premier point de contact pour le premier canal de la ligne de données (4),
dans lequel la deuxième source de tension continue (251) est étudiée pour appliquer, via le deuxième ensemble de module d'alimentation inductif (225), une deuxième tension continue au deuxième point de contact pour le deuxième canal de la ligne de données (4),
**caractérisé en ce que** la première tension continue et la deuxième tension continue sont séparées galvaniquement.

10. Module d'alimentation (2) selon la revendication 9, dans lequel au moins l'un des deux courants continus transmis par la première ou la deuxième source de tension continue (241, 251) est commutable, et dans lequel un limiteur de courant (253) est prévu pour la source de tension continue (251) associée au courant continu commutable.

11. Module d'alimentation (2) selon la revendication 10, dans lequel le limiteur de courant (253) présente un couplage en série d'un transistor (2531) et d'une résistance de précision, à travers lequel circule le deuxième courant continu, et un régulateur, dans lequel le régulateur est étudié pour détecter le courant continu circulant à travers la résistance de précision et commander le transistor (2531) de telle sorte que le courant continu circulant à travers le transistor (2531) ne dépasse pas une valeur de seuil prescrite.

12. Module d'alimentation (2) selon la revendication 10 ou 11, dans lequel un commutateur à faible rebondissement (252) est disposé entre la deuxième source de tension continue (251) et le limiteur de courant (253) du module d'alimentation (2).

13. Module de consommateur (3) pour un système de bus (1) avec un premier consommateur de tension continue (34), un deuxième consommateur de tension continue (35), une interface physique (331), un premier transmetteur (332), un deuxième transmetteur (333), un premier ensemble inductif (325), un deuxième ensemble inductif (325), un premier ensemble capacitif (326) et un deuxième ensemble capacitif (326), et un raccordement (31) pour une ligne de données (4) qui présente un premier point de contact pour un premier canal avec une première paire de brins (41) et un deuxième point de contact pour un deuxième canal avec une deuxième paire de brins (42),
dans lequel l'interface de module de consommateur physique (331) est étudiée pour réceptionner, via le premier transmetteur de module de consommateur (332) et le premier ensemble de module de consommateur capacitif, un premier signal de données différentiel à l'attention du ou en provenance du premier point de contact pour le premier canal de la ligne de données (4), et via le deuxième transmetteur de module de consommateur (333) et le deuxième ensemble de module de consommateur capacitif, un deuxième signal de données différentiel à l'attention du ou en provenance du deuxième point de contact pour le deuxième canal de la ligne de données (4),
dans lequel le premier consommateur de tension continue de module de consommateur (34) est étudié pour transmettre, via le premier ensemble de module de consommateur inductif (325), une première tension continue au premier point de contact pour le premier canal de la ligne de données (4),
dans lequel le deuxième consommateur de tension continue de module de consommateur (35) est étudié pour réceptionner, via le deuxième ensemble de module de consommateur inductif (325), une deuxième tension continue au deuxième point de contact pour le deuxième canal de la ligne de données (4),
**caractérisé en ce que** la première tension continue et la deuxième tension continue sont séparées galvaniquement.

14. Module de consommateur (3) selon la revendication 13, lequel présente en outre une unité de traitement (36), une autre interface physique (391), un troisième transmetteur (392), un quatrième transmetteur (393), un troisième ensemble inductif (385) et un quatrième ensemble inductif (385), un troisième ensemble capacitif (386) et un quatrième ensemble capacitif (386), dans lequel l'interface de module de consommateur physique (331) est raccordée à l'autre interface de module de consommateur physique (391) pour transmettre le premier signal de données différentiel et le deuxième signal de données différentiel,
dans lequel le premier consommateur de tension continue de module de consommateur (34) raccorde le premier ensemble de module de consommateur inductif (325) au troisième ensemble de module de consommateur inductif (385) pour transmettre le premier courant continu, et
dans lequel le deuxième consommateur de tension continue de module de consommateur (35) raccorde le deuxième ensemble de module de consommateur inductif (325) au quatrième ensemble de module de consommateur inductif (385) pour transmettre le deuxième courant continu.

15. Module de consommateur (3) selon la revendication 13 ou 14, dans lequel un ensemble de surveillance de tension (343, 353) est prévu, lequel est raccordé au premier consommateur de tension continue de module de consommateur (34) et au deuxième consommateur de tension continue de module de consommateur (35) pour surveiller si le premier consommateur de tension continue de module de consommateur (34) et le deuxième consommateur de tension continue de module de consommateur (35) travaillent respectivement dans une plage spécifiée de la tension de service.
